# FASCICULE DE BREVET EUROPEEN

(11) **EP 2 437 978 B1**
(45) Date de publication et mention de la délivrance du brevet: **02.06.2021**
(21) Numéro de dépôt: 10724748.8
(22) Date de dépôt: 03.06.2010
(51) Int. Cl.: B64C 25/14, B64C 25/20, B64C 25/26

(54) **PROCÉDÉ DE MANOEUVRE D'UN ATTERRISSEUR À CONTREFICHE BRISEUSE**
VERFAHREN ZUM BETRIEB EINER FAHRWERKSANORDNUNG MIT EINER TRENNSTREBE
METHOD FOR OPERATING A LANDING GEAR ASSEMBLY WITH A BREAKER STRUT

(30) Priorité: 05.06.2009 FR 0902721
(43) Date de publication de la demande: 11.04.2012
(73) Titulaire: Safran Landing Systems, 78140 Vélizy-Villacoublay (FR)
(72) Inventeur: KELLER, Nicolas, F-94140 Alfortville (FR); DE PINDRAY, Albert, F-78114 Magny les hameaux (FR); CAMPBELL, Edouard, F-91600 Savigny sur Orge (FR); DUCOS, Dominique, F-91600 Savigny Sur Orge (FR); DUBOIS, Sebastien, F-91300 Massy (FR)
(74) Mandataire: Lavialle, Bruno François Stéphane
(86) Numéro de dépôt international: PCT/EP2010/057778
(87) Numéro de publication internationale: WO 2010/139756

(56) Documents cités:
- CH-A- 215 809
- FR-A1- 2 801 865
- US-A- 2 222 975
- US-A- 5 022 609
- US-A1- 2008 230 650

## Description

L'invention est relative à un nouveau procédé de manœuvre d'un atterrisseur à contrefiche briseuse. Par manœuvre, on entend le déplacement de l'atterrisseur entre sa position déployée et sa position rétractée, ou inversement.

### ARRIERE-PLAN TECHNOLOGIQUE DE L'INVENTION

On connaît des atterrisseurs montés pivotants sur une structure d'aéronef entre une position rétractée et une position déployée, l'atterrisseur étant stabilisé en position déployée par un organe de contreventement comportant au moins une contrefiche briseuse à deux bielles articulées entre elles qui, lorsque l'atterrisseur est en position déployée, sont maintenues sensiblement alignées entre elles par un organe de stabilisation à deux biellettes articulées entre elles qui sont également maintenues sensiblement alignées entre elles par un organe de verrouillage.

La contrefiche est attelée d'une part au caisson de l'atterrisseur et d'autre part à la structure de l'aéronef, tandis que l'organe de stabilisation est attelé d'une part à la contrefiche et d'autre part au caisson, ou à la structure de l'aéronef.

Il est connu de provoquer le mouvement de l'atterrisseur au moyen d'une part d'un actionneur de relevage, par exemple un vérin attelé au caisson de l'atterrisseur, et d'autre part d'un actionneur de déverrouillage chargé de neutraliser l'organe de verrouillage.

Ainsi, partant de la position déployée, on actionne d'abord l'actionneur de déverrouillage, qui agit à l'encontre de l'organe de verrouillage pour forcer les deux biellettes de l'organe de stabilisation à se désaligner, ce qui force par conséquent les deux bielles de la contrefiche à se désaligner. Ainsi désalignées, elles ne peuvent plus s'opposer au relevage de l'atterrisseur provoqué par l'action de l'actionneur de relevage. Ainsi, le relevage d'un tel atterrisseur nécessite deux actionneurs Le document US 2 222 975 A décrit un tel atterrisseur.

Il est par ailleurs connu des atterrisseurs à contrefiche briseuse dont les deux bielles sont stabilisées en position alignée au moyen de ressorts de rappel confirmant les bielles en position alignée définie par une butée interne entre les deux bielles. Dans ce type d'atterrisseur, il est connu de provoquer le relevage de l'atterrisseur au moyen d'un unique actionneur agissant sur celle des bielles qui est articulée à la structure de l'aéronef. L'actionneur provoque la rotation de la bielle associée à l'encontre des ressorts de rappel. Cette rotation se poursuivant, elle provoque le déplacement de l'atterrisseur qui est entraîné par les bielles certes désalignées, mais toujours reliées entre elles. Ainsi, le même actionneur déverrouille et relève l'atterrisseur.

Cependant, une telle configuration n'est adaptée que pour les atterrisseurs ne comportant pas d'organe de stabilisation à alignement. En effet, dans un atterrisseur dont la contrefiche briseuse est stabilisée par un organe de stabilisation à deux biellettes, l'actionneur de relevage attelé à l'une des bielles de contrefiche n'est pas capable de désaligner les biellettes de l'organe de stabilisation, ce qui empêche tout mouvement de l'atterrisseur.

### OBJET DE L'INVENTION

L'invention vise à proposer un atterrisseur d'aéronef selon la revendication 1 et un procédé selon la revendication 4 pour manœuvrer de façon simple un atterrisseur à contrefiche briseuse et organe de stabilisation à alignement.

### BREVE DESCRIPTION DE L'INVENTION

En vue de la réalisation de ce but, on propose un procédé pour manœuvrer entre une position déployée et une position rétractée un atterrisseur d'aéronef comportant une jambe articulée sur l'aéronef, la jambe étant stabilisée en position déployée par une contrefiche briseuse à deux bielles articulées, la contrefiche étant maintenue en position alignée par un organe de stabilisation à deux biellettes articulées maintenues alignées par un organe de verrouillage. Selon l'invention, le procédé comporte les étapes d'agencer la contrefiche et l'organe de stabilisation de sorte qu'au moins l'une des biellettes de l'organe de stabilisation présente un mouvement continu lors d'un déplacement de la jambe entre la position déployée et la position rétractée, et d'atteler un actionneur de manœuvre à cette biellette pour faire pivoter la biellette à l'encontre de l'organe de verrouillage et exercer sur celle-ci un effort tendant à déplacer la jambe.

Ainsi, l'actionneur de manœuvre assure à la fois le désalignement des biellettes de l'organe de stabilisation à l'encontre de l'organe de verrouillage, ce qui provoque le désalignement des bielles de la contrefiche, mais également l'entraînement en rotation de la jambe d'atterrisseur, puisque les biellettes, les bielles et la jambe sont toutes liées cinématiquement entre elles.

Le fait que le mouvement de la biellette actionnée soit continu permet d'assurer le relevage de l'atterrisseur au moyen d'une action continue et dans le même sens de l' actionneur. L'actionneur qui devra être compatible avec l'amplitude du mouvement de la biellette actionnée sera, selon l'invention, de type rotatif.

### BREVE DESCRIPTION DES FIGURES

L'invention sera mieux comprise à la lumière de la description des figures des dessins annexés, parmi lesquelles :
- La figure 1 est une vue de côté d'un atterrisseur faisant application des dispositions de l'invention, illustré ici en position déployée ;
- les figures 2 à 4 sont des vues de côté squelettiques de l'atterrisseur de la figure 1, montrant celui-ci à diverses étapes d'un relevage, à savoir la position déployée, une position intermédiaire, et la position rétractée ;
- la figure 5 est une vue analogue à celle de la figure 1 d'une variante de réalisation de l'invention.

### DESCRIPTION DETAILLEE DES FIGURES

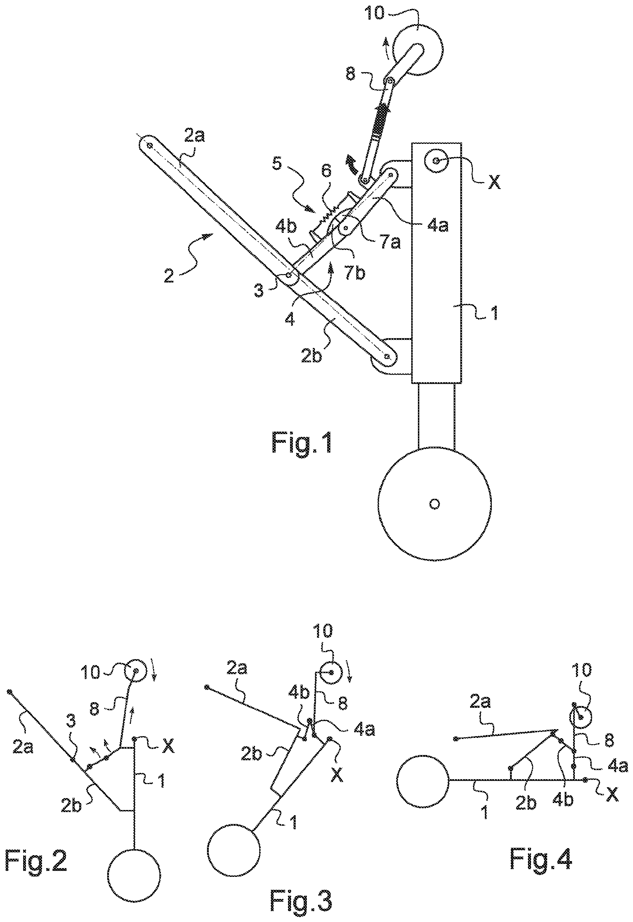

En référence tout d'abord à la figure 1, l'atterrisseur comporte de façon connue en soi une jambe 1 articulée à la structure de l'aéronef selon un axe d'articulation X (vu ici en bout) pour être mobile entre une position déployée illustrée ici dans laquelle l'atterrisseur est amené préalablement à un atterrissage, et une position rétractée qui est celle de l'atterrisseur en vol.

Une contrefiche briseuse 2 est articulée d'une part sur la jambe 1 et d'autre part sur la structure de l'aéronef. La contrefiche 2 briseuse comprend deux bielles 2a, 2b, articulées entre elles au niveau d'un genou 3. La bielle 2a est par ailleurs articulée sur l'aéronef, tandis que la bielle 2b est articulée sur la jambe 1. La contrefiche briseuse 2 est stabilisée en position sensiblement alignée au moyen d'un organe de stabilisation 4 comportant deux biellettes 4a, 4b, également articulées entre elles. La biellette 4a est articulée sur la jambe 1, et la biellette 4b est articulée sur la contrefiche 2. Les biellettes 4a,4b sont maintenues en position sensiblement alignée par un organe de verrouillage 5 comportant des ressorts de rappel 6 rappelant les biellettes 4a,4b vers la position de verrouillage définie par des butées 7a,7b. Ainsi stabilisée, la contrefiche briseuse 2 s'oppose à toute rotation de la jambe 1 autour de son axe d'articulation X, de sorte que la position déployée est une position stable.

Comme cela est bien connu, les bielles 2a, 2b et les biellettes 4a, 4b sont conçues de sorte que pour arriver à la position verrouillée illustrée ici, le genou d'articulation des bielles et le genou d'articulation des biellettes passent légèrement au-delà de l'alignement géométrique illustré par les traits interrompus.

Selon l'invention, un actionneur de manœuvre 10 est disposé sur la structure de l'aéronef pour être attelé à la biellette 4a de l'organe de stabilisation 4, celle qui est ici articulée sur la jambe 1. Ici, l'actionneur de manœuvre 10 est du type rotatif et comporte une manivelle qui est attelée à la biellette 4a au moyen d'une tringle 8.

Le fonctionnement de l'ensemble est maintenant expliqué en référence aux figures 2 à 4. Lorsque l'atterrisseur doit être remonté en position rétractée, l'actionneur de manœuvre 10 est sollicité. Il exerce une traction sur la biellette 4a (voir flèche), ce qui a pour effet de faire pivoter celle-ci autour de son axe de rotation sur la jambe, et ainsi briser l'alignement des biellettes 4a, 4b à l'encontre de l'action des ressorts de rappel 6 de l'organe de verrouillage 5.

Comme la biellette 4b est attelée à la contrefiche 2, l'alignement des bielles 2a,2b est également brisé. L'atterrisseur est ainsi déverrouillé et peut être pivoté autour de son axe d'articulation sous l'action de l'actionneur de manœuvre 10, comme cela est illustré à la figure 3.

Alors que l'actionneur de manœuvre 10 continue à faire pivoter la biellette 4a, celle-ci entraîne successivement l'autre biellette 4b, les bielles 2a, 2b de la contrefiche 2, et, pour finir, la jambe 1 de l'atterrisseur. Tous ces éléments sont liés entre eux de sorte qu'à une position angulaire de la biellette 4a correspond une et une seule position de chacun de ces éléments.

Le mouvement se poursuit jusqu'à la position illustré à la figure 4, dans laquelle la jambe 1 est arrivée en position rétractée.

Il importe de faire en sorte que lors du mouvement de l'atterrisseur de sa position déployée à sa position rétractée, la biellette 4a se déplace selon un mouvement continu et sans singularité, de sorte que le mouvement de la jambe peut être assurée au moyen d'une action continue et toujours dans le même sens de l'actionneur de manœuvre 10 sur la biellette 4a. Ainsi, avec un seul actionneur, on assure le désalignement de l'organe de stabilisation, ce qui provoque de le désalignement de la contrefiche, et, partant, le déplacement de la jambe.

Pour la descente de l'atterrisseur en position déployée, elle pourra être effectuée sous l'effet de la gravité, l'actionneur de manœuvre 10 étant contrôlé pour réguler la vitesse de descente de l'atterrisseur. En effet, le mouvement de la biellette 4a, qui est continu et sans singularité dans le sens du relevage, est donc continu et sans singularité dans le sens de la descente, de sorte que l'actionneur de manœuvre est entraîné toujours dans le même sens lors de la descente de l'atterrisseur et fonctionne donc en générateur, et peut donc être utilisé comme frein lors de la descente. Pour ce faire, il convient bien sûr que l'actionneur de manœuvre soit réversible et puisse être entraîné par la biellette 4a lors de la descente de l'atterrisseur.

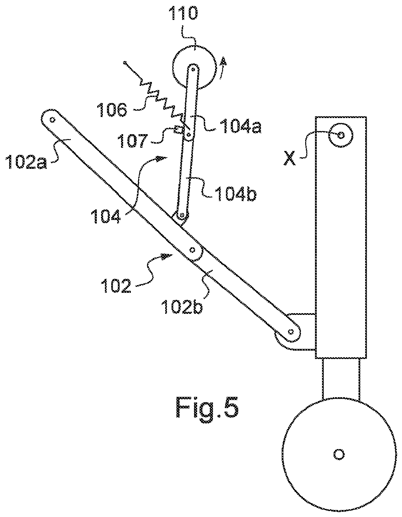

Selon une variante illustrée à la figure 5 sur laquelle les éléments communs avec ceux de la figure 1 portent une référence augmentée d'une centaine, l'actionneur de manœuvre 110 est toujours rotatif, mais est placé directement au niveau de l'axe de rotation de la biellette 104a pour entraîner directement celle-ci en rotation. On notera ici que la biellette 104a est maintenant articulée non pas sur la jambe, mais directement sur la structure de l'aéronef. On notera également que le ressort de verrouillage 106 est également attelé à la structure de l'aéronef, la position de verrouillage des biellettes 104a,104b étant maintenant définie par une butée 107 disposée sur la structure de l'aéronef pour arrêter la biellette 104a dans la position illustrée ici, dans laquelle elle est sensiblement alignée avec la biellette 104b.

Ici encore, on assure le déverrouillage et le relevage de l'atterrisseur à l'aide d'un seul actionneur.

De préférence, l'actionneur sera choisi du type le plus simple et le plus fiable possible. Si cela es possible, on privilégiera un actionneur de type moteur couple, à entraînement direct sans réduction. Si cela devait être nécessaire, on privilégiera un réducteur très fiable, par exemple de type à cloche déformable, plus connu sous le nom commercial « harmonic drive », ne présentant pas de mode de panne en grippage.

L'invention n'est pas limitée à ce qui vient d'être décrit, mais au contraire englobe toute variante entrant dans le cadre défini par les revendications.

En particulier, la ou les butées définissant la position sensiblement alignée des biellettes de l'organe de stabilisation pourront être placées soit entre les biellettes comme dans l'exemple de la figure 1, soit sur la structure de l'aéronef pour coopérer avec la biellette actionnée, comme dans l'exemple de la figure 2 ; mais elle pourra également coopérer avec une partie mobile de l'actionneur pour arrêter celle-ci dans une position définie, cette position étant confirmée par un organe ressort. Il importe bien sûr que l'actionneur puisse manœuvre la biellette associée à l'encontre de cet organe ressort.

En outre, l'actionneur de manœuvre pourra être de type linéaire en étant attelé à l'une des biellettes de l'organe de stabilisation, si la course et les bras de levier d'un tel actionneur sont compatibles avec le relevage de l'atterrisseur. L'actionneur pourra être de type électrique ou hydraulique.

En outre, bien que dans les exemples illustrés, l'actionneur est fixé à la structure de l'aéronef, on pourra, toujours en restant dans le cadre de l'invention, atteler l'actionneur directement sur l'un des éléments de l'atterrisseur, du moment que l'actionneur reste par ailleurs attelé à l'une des biellettes de l'organe de stabilisation.

## Revendications

1. Atterrisseur d'aéronef comportant une jambe articulée sur l'aéronef et manœuvrable entre une position déployée et une position rétractée, une contrefiche (2;102) briseuse à deux bielles articulées, un organe de stabilisation (4;104) à deux biellettes articulées et un organe de verrouillage, la jambe étant stabilisée en position déployée par ladite contrefiche briseuse à deux bielles articulées, la contrefiche étant maintenue en position alignée par ledit organe de stabilisation à deux biellettes articulées maintenues alignées par ledit organe de verrouillage, **caractérisé en ce que** ledit atterrisseur d'aéronef comporte un actionneur de manœuvre unique (10) et que la contrefiche (2;102) et l'organe de stabilisation (4;104) sont agencés de sorte qu'au moins l'une des biellettes (4a;104a) de l'organe de stabilisation présente un mouvement continu lors d'un déplacement de la jambe de la position déployée à la position rétractée, le mouvement continu étant assuré au moyen d'une action continue dudit unique actionneur de manœuvre, l'unique actionneur de manœuvre (10) étant du type rotatif, l'unique actionneur de manœuvre (10;110) étant attelé à cette biellette (4a;104a) pour la faire pivoter à l'encontre de l'organe de verrouillage et exercer sur celle-ci un effort tendant tout à la fois à désaligner les biellettes de l'organe de stabilisation à l'encontre de l'organe de verrouillage, à désaligner les bielles de la contrefiche, et à déplacer la jambe.

2. Atterrisseur selon la revendication 1, dans lequel l'actionneur de manœuvre (10) est attelé à la biellette associée au moyen d'une tringle (8).

3. Atterrisseur selon la revendication 1, dans lequel l'actionneur de manœuvre (110) est disposé directement au niveau d'un axe d'articulation de la biellette (104a) associée pour agir directement sur celle-ci.

4. Procédé pour manœuvrer entre une position déployée et une position rétractée un atterrisseur d'aéronef comportant une jambe articulée sur l'aéronef, la jambe étant stabilisée en position déployée par une contrefiche briseuse à deux bielles articulées, la contrefiche étant maintenue en position alignée par un organe de stabilisation à deux biellettes articulées maintenues alignées par un organe de verrouillage, **caractérisé en ce que** le procédé comporte les étapes d'agencer la contrefiche (2;102) et l'organe de stabilisation (4;104) de sorte qu'au moins l'une des biellettes (4a;104a) de l'organe de stabilisation présente un mouvement continu lors d'un déplacement de la jambe de la position déployée à la position rétractée, et d'atteler un unique actionneur de manœuvre (10;110) à cette biellette pour faire pivoter la biellette (4a;104a) à l'encontre de l'organe de verrouillage et exercer sur celle-ci un effort tendant tout à la fois à désaligner les biellettes de l'organe de stabilisation à l'encontre de l'organe de verrouillage, à désaligner les bielles de la contrefiche, et à déplacer la jambe, l'unique actionneur de manœuvre (10) étant du type rotatif.

5. Procédé selon la revendication 4, dans lequel l'actionneur de manœuvre (10) est attelé à la biellette associée au moyen d'une tringle (8).

6. Procédé selon la revendication 1, dans lequel l'actionneur de manœuvre (110) est disposé directement au niveau d'un axe d'articulation de la biellette (104a) associée pour agir directement sur celle-ci.

## Patentansprüche

1. Luftfahrzeugfahrwerk, umfassend ein Bein, das an dem Luftfahrzeug angelenkt und zwischen einer ausgefahrenen Position und einer eingefahrenen Position manövrierbar ist, eine Unterbrecherstrebe (2; 102) mit zwei angelenkten Stangen, ein Stabilisierungselement (4; 104) mit zwei angelenkten kleinen Stangen und ein Verriegelungselement, wobei das Bein in der ausgefahrenen Position durch die genannte Unterbrecherstrebe mit zwei angelenkten Stangen stabilisiert ist, wobei die Strebe durch das genannte Stabilisierungselement mit zwei angelenkten kleinen Stangen, die durch das genannte Verriegelungselement fluchtend gehalten werden, in einer fluchtenden Position gehalten wird, **dadurch gekennzeichnet, dass** das genannte Luftfahrzeugfahrwerk einen einzigen Stellaktor (10) umfasst und dass die Strebe (2; 102) und das Stabilisierungselement (4; 104) derart ausgebildet sind, dass mindestens eine der kleinen Stangen (4a; 104a) des Stabilisierungselements eine kontinuierliche Bewegung während einer Verschiebung des Beins von der ausgefahrenen Position in die eingefahrene Position aufweist, wobei die kontinuierliche Bewegung mittels einer kontinuierlichen Aktion des genannten einzigen Stellaktors sichergestellt wird, wobei der einzige Stellaktor (10) vom Typ Drehaktor ist, wobei der einzige Stellaktor (10; 110) an dieser kleinen Stange (4a; 104a) angelenkt ist, um sie entgegen dem Verriegelungselement zu verschwenken und auf diese eine Kraft auszuüben, die dazu neigt, gleichzeitig die Stangen des Stabilisierungselements entgegen dem Verriegelungselement außer Flucht zu bringen, die Stangen der Strebe außer Flucht zu bringen und das Bein zu verschieben.

2. Fahrwerk nach Anspruch 1, bei dem der Stellaktor (10) an die dazugehörige kleine Stange mittels einer Stange (8) gekoppelt ist.

3. Fahrwerk nach Anspruch 1, bei dem der Stellaktor (110) direkt im Bereich einer Gelenkverbindungsachse der dazugehörigen kleinen Stange (104a) angeordnet ist, um direkt auf die Stange einzuwirken.

4. Verfahren zum Manövrieren zwischen einer ausgefahrenen Position und einer eingefahrenen Position eines Luftfahrzeugfahrwerks, das ein an dem Luftfahrzeug angelenktes Bein umfasst, wobei das Bein in der ausgefahrenen Position durch eine Unterbrecherstrebe mit zwei angelenkten Stangen stabilisiert wird, wobei die Strebe durch ein Stabilisierungselement mit zwei angelenkten kleinen Stangen, die durch ein Verriegelungselement fluchtend gehalten werden, in einer fluchtenden Position gehalten wird, **dadurch gekennzeichnet, dass** das Verfahren die Schritte des Ausbildens der Strebe (2; 102) und des Stabilisierungselements (4; 104) derart umfasst, dass mindestens eine der kleinen Stangen (4a; 104a) des Stabilisierungselements eine kontinuierliche Bewegung während einer Verschiebung des Beins von der ausgefahrenen Position in die eingefahrene Position aufweist, und des Ankoppelns eines einzigen Stellaktors (10; 110) an diese kleine Stange, um die kleine Stange (4a; 104a) entgegen dem Verriegelungselement zu verschwenken und auf diese eine Kraft auszuüben, die dazu neigt, gleichzeitig die Stangen des Stabilisierungselement entgegen dem Verriegelungselement außer Flucht zu bringen, die Stangen der Strebe außer Flucht zu bringen und das Bein zu verschieben, wobei der einzige Stellaktor (10) vom Typ Drehaktor ist.

5. Verfahren nach Anspruch 4, bei dem der Stellaktor (10) an die dazugehörige kleine Stange mittels einer Stange (8) gekoppelt ist.

6. Verfahren nach Anspruch 4, bei dem der Stellaktor (110) direkt im Bereich einer Gelenkverbindungsachse der dazugehörigen kleinen Stange (104a) angeordnet ist, um direkt auf die Stange einzuwirken.

## Claims

1. An aircraft landing gear comprising a leg hinged to the aircraft and operable between a deployed position and a retracted position, a folding strut (2; 102) comprising two hinged-together links, a stabilizer member (4; 104) comprising two hinged-together links and a locking member, the leg being stabilized in the deployed position by said folding strut comprising two hinged-together links, the strut being held in the aligned position by said stabilizer member comprising two hinged-together links, themselves held in alignment by said locking member, **characterized in that** said aircraft landing gear comprises a single operating actuator (10) and that the strut (2; 102) and the stabilizer member (4; 104) are arranged in such a manner that at least one of the links (4a; 104a) of the stabilizer member moves continuously during a movement of the leg from the deployed position to the retracted position, the continuous movement being ensured by a continuous action of said operating actuator, the single operating actuator (10) being of the rotary type, the single operating actuator (10; 110) being attached to said link (4a; 104a) in order to cause the link to pivot against the locking member and exert thereon a force tending simultaneously to bring the links of the stabilizer member out of alignment against the locking member, to bring the links of the strut out of alignment, and to move the leg.

2. A landing gear according to claim 1, wherein the operating actuator (10) is attached to the associated link by means of a rod (8).

3. A landing gear according to claim 1, wherein the operating actuator (110) is arranged directly at a hinge axis of the associated link (104a) in order to act directly on the link.

4. A method of operating an aircraft landing gear between a deployed position and a retracted position, the landing gear comprising a leg hinged to the aircraft, the leg being stabilized in the deployed position by a folding strut comprising two hinged-together links, the strut being held in an aligned position by a stabilizer member comprising two hinged-together links, themselves held in alignment by a locking member, **characterized in that** the method comprises the steps to arrange the strut (2; 102) and the stabilizer member (4; 104) in such a manner that at least one of the links (4a; 104a) of the stabilizer member moves continuously during a movement of the leg from the deployed position to the retracted position, and to attach a single operating actuator (10 ; 110) to said link in order to cause the link (4a; 104a) to pivot against the locking member and to exert thereon a force tending simultaneously to bring the links of the stabilizer member out of alignment against the locking member, to bring the links of the strut out of alignment, and to move the leg, the single operating actuator (10) being of the rotary type.

5. A method according to claim 4, wherein the operating actuator (10) is attached to the associated link by means of a rod (8).

6. A method according to claim 4, wherein the operating actuator (110) is arranged directly at a hinge axis of the associated link (104a) in order to act directly thereon.
